Europäisches Patentamt

(19) European Patent Office

Office européen des brevets

(11) Publication number: **0 039 586**
**B1**

(12) **EUROPEAN PATENT SPECIFICATION**

(45) Date of publication of patent specification: **12.09.84**

(51) Int. Cl.³: **G 05 D 16/10**

(21) Application number: **81301920.5**

(22) Date of filing: **30.04.81**

(54) **Hydraulic pressure control valve.**

(30) Priority: **07.05.80 GB 8015125**

(43) Date of publication of application:
**11.11.81 Bulletin 81/45**

(45) Publication of the grant of the patent:
**12.09.84 Bulletin 84/37**

(84) Designated Contracting States:
**BE DE FR GB IT SE**

(56) References cited:
**DE-A-2 813 618**
**DE-C-1 148 833**
**US-A-3 196 891**
**US-A-3 916 934**
**US-A-4 011 888**

(73) Proprietor: **NORMALAIR-GARRETT (HOLDINGS) LIMITED**
**Yeovil Somerset (GB)**

(72) Inventor: **Butcher, Raymond Joseph**
**Dairy House Ryme Intrinsica**
**Sherborne, Dorset DT9 6JX (GB)**
Inventor: **Rose, Gerald David**
**28 Plantagenet Chase**
**Yeovil, Somerset BA20 2PR (GB)**

(74) Representative: **Jack, Bruce James et al**
**FORRESTER & BOEHMERT Widenmayerstrasse 4/I**
**D-8000 Munchen 22 (DE)**

Courier Press, Leamington Spa, England.

## Description

This invention relates to hydraulic pressure control valves of the type having a control spool operably associated with resilient pressure balancing means.

According to the invention an hydraulic pressure control valve having a control spool operably associated with resilient pressure balancing means is characterised by an arrangement of piston assemblies adapted for stepwise adjustment of the resilient pressure balancing means.

Preferably the pistons of the arrangement of piston assemblies have strokes of appropriate relative amplitude providing the stepwise adjustment of the resilient pressure balancing means by sequential displacement of the pistons in a binary digital sequence.

The arrangement of piston assemblies, the pressure balancing means and the control spool may be in line with each other. Preferably the arrangement of piston assemblies is of telescopic form.

Operation of the pistons may be controlled by solenoid valves that in their energised condition connect the valve input pressure source with cylinders in which the pistons are operable.

The valve input pressure source may be connected to apply input pressure to one end of the control spool, under the control of a solenoid valve, so that when solenoid valves controlling operation of the pistons are closed and input pressure is applied to the face of that end of the control spool remote from the pressure balancing means, the force applied by the pressure balancing means is overcome and the control spool is moved to connect the valve output pressure outlet to the valve return to tank outlet. In this condition the valve will have zero pressure output.

In an embodiment of the invention the pressure balancing means comprises a compression spring constrained between retainer means that react against one end of the control spool and project a piston from the end remote from the spool. This piston is operative in one of two cylinders provided within a tubular piston. These cylinders are separated by a piston head provided by a cross-web situated between the ends of the tubular piston. Slidingly housed in the other of the two cylinders is a piston-formed tailstock of a further piston which is operative in a cylinder formed within the body of the pressure control valve.

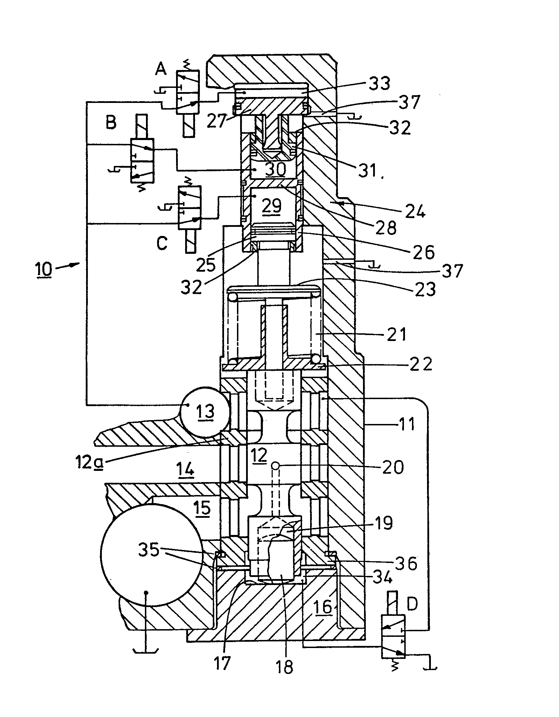

An exemplary embodiment of the invention will now be described with reference to the accompanying drawing which shows a diagrammatic sectional view of a pressure control valve providing for selection of eight output pressures.

Referring to the drawing, a pressure control valve 10 comprises a valve body 11 housing a spool 12 movable within a spool sleeve 12a so as to control fluid connection between a supply pressure inlet 13, an output pressure outlet 14 and a "return-to-tank" outlet 15. The spool 12 and spool sleeve 12a are retained in a bore within the valve body 11 by a threaded and sealed plug 16 which presents a recessed thrust face 17 to one end of a small pressure sensing piston 18 which is operable in a short bore 19 disposed axially in one end of the spool 12. The bore 19 is connected by a pressure sensing passage 20 to the output pressure outlet 14 at a position remote from the thrust surface 17. The other end of the spool 12, remote from the thrust surface 17, is arranged to be reactant against the force of resilient pressure balancing means, in this embodiment a compression spring 21. The compression spring 21 is constrained between a pair of retainers 22 and 23; that face of the retainer 23 which contacts the spring 21 projecting a central stem which is slidable within a bore in a central stem projecting from the spring contacting face of the retainer 22. The bore in the central stem of the retainer 22 extends through to the opposite face of the retainer 22 which is in simple abutment with the end of the spool 12. The other face of the retainer 23 also projects a central stem which carries a piston 25 forming part of an arrangement of piston assemblies 24.

The arrangement of piston assemblies 24 is of telescopic form and comprises the piston 25 and two other pistons 26 and 27, all of which are housed within the valve body in a manner enabling them to operate along an axis which is common with the axis of the spool 12. The piston 26 is of tubular form, having a piston head formed by a cross-web 28 intermediate the ends thereof so that two cylinders 29 and 30 are formed within the piston 26. The piston 25 is slidable within the cylinder 29, whilst a piston-formed tailstock 31 of piston 27 is slidable within the cylinder 30. The piston 25 and the piston-formed tailstock 31 are retained within the cylinders 29 and 30, respectively, by retaining rings 32. The piston 27 is slidable within a cylinder 33 formed in the valve body 11 at the end of the bore which houses the spool 12 and spring 21.

The cylinders 33, 30 and 29 are each connected to the supply pressure inlet by solenoid valves A, B and C, respectively, and their lengths are preselected to provide piston strokes of relative amplitude that in this embodiment are in the binary digital sequence of 1, 2 and 4 units, respectively.

A fourth solenoid D is provided for control of a duct connecting the supply pressure inlet 13 with a region 34 formed in the valve body 11 between the end of the spool 12 and the recessed face 17 of the plug 16.

Positional adjustment of the spool sleeve 12a is obtained by annular shims 35 positioned on each side of a raised rim 36 thereon and between a shoulder in the valve body 11 and the inner face of the plug 16.

Vents 37 connect the region at each end of the tubular piston 26 to 'tank'. The return lines of the four solenoid valves A, B, C, D, are also connected to tank.

In operation the output stage of the valve is analogue in that the position of the control spool 12 is proportional to the error, in the output pressure, from the pressure demanded. When the output pressure is exactly as commanded by the balancing spring 21, the force upon the pressure sensing piston 18 is such that the spool 12 is in the mid-position as shown in the drawing. If the output pressure is less than that commanded by the balancing spring 21, the force upon the piston 18 will be less, the spring 21 will extend, and the spool 12 will be moved so as to allow the supply pressure inlet 13 to be connected to the output pressure outlet 14, so reducing the error. If the pressure at the output pressure outlet 14 is higher than that commanded by the spring 21, then the spool 12 will move in the other direction so as to connect the output pressure outlet 14 to the return-to-tank outlet 15 and so reduce the output pressure by bleeding to tank.

The balancing spring 21 provides a datum for the level of pressure to which the output is controlled. Variation of the spring load on the spool is achieved by sequential operation of the solenoid valves A, B and C. Energising solenoid valve A connects cylinder 33 with the supply pressure at inlet 13 to move piston 27 through its stroke; energising solenoid valve B connects cylinder 30 to supply pressure to move piston 26 through its stroke; and energising solenoid C connects cylinder 29 to supply pressure to move piston 25 through its stroke. By arranging the pistons 27, 26 and 25 to have strokes of relative amplitude of 1, 2 and 4 units, respectively, the spring load on the spool can be varied in equal step increments, from 0 to 7, by operation of the solenoid valves A, B, C and D in binary sequence.

Solenoid valve D enables output pressure to be reduced to zero. This is achieved by de-energising solenoid valves A, B and C, so that they are switched to connect the cylinders 33, 30 and 29 to tank, and energising solenoid valve D so that supply pressure is applied to the full area of that end of the spool 12 which houses the pressure sensing piston 18. This creates a force large enough to deflect the spring such as to connect the output pressure outlet 14 to the return-to-tank outlet 15.

The solenoid switching sequence for a pressure control valve having a minimum controlled output pressure of 40 p.s.i. that can be raised in increments of 30 p.s.i. to a maximum of 250 p.s.i., which is equal to supply pressure, is shown in the table below. In this table, "0" indicates that the solenoid is de-energised, "1" that it is energised.

| Solenoid | | | | Output |
| A | B | C | D | Pressure (p.s.i.) |
|---|---|---|---|---|
| 0 | 0 | 0 | 1 | 0 |
| 0 | 0 | 0 | 0 | 40 |
| 1 | 0 | 0 | 0 | 70 |
| 0 | 1 | 0 | 0 | 100 |
| 1 | 1 | 0 | 0 | 130 |
| 0 | 0 | 1 | 0 | 160 |
| 1 | 0 | 1 | 0 | 190 |
| 0 | 1 | 1 | 0 | 220 |
| 1 | 1 | 1 | 0 | 250 |

In the accompanying drawing the valve is shown in a condition giving maximum output pressure; solenoid valves A, B and C being energised so that their respective cylinders are connected to supply pressure and solenoid valve D being de-energised so that it is switched to connect region 34 to tank.

## Claims

1. An hydraulic pressure control valve having a control spool operably associated with a resilient pressure balancing means, characterised by an arrangement of piston assemblies adapted to stepwise adjustment of the resilient pressure balancing means.

2. An hydraulic pressure control valve as claimed in Claim 1, further characterised in that the arrangement of piston assemblies comprises pistons having strokes of appropriate relative amplitude for providing the stepwise adjustment by sequential displacement of the pistons in a binary digital sequence.

3. An hydraulic control valve as claimed in Claim 1 or Claim 2, further characterised in that the arrangement of piston assemblies is of telescopic form.

4. An hydraulic pressure control valve as claimed in Claim 3, further characterised in that the arrangement of piston assemblies comprises at least one tubular piston having a piston-head formed by a cross-web positioned so as to provide two cylinders for two other pistons of which at least one carries a further piston on a stem projecting externally of the tubular piston.

5. An hydraulic pressure control valve as claimed in any preceding claim, further characterised in that pistons of the piston assemblies are individually operable by a flow control valve arranged to control flow of pressurised fluid into and out of each cylinder containing one of the pistons.

6. An hydraulic pressure control valve as claimed in Claim 6, further characterised in that the flow control valve is a solenoid valve.

## Patentansprüche

1. Hydraulisches Druckregelventil mit einem Steuerkörper, dem wirkungsmäßig eine elastische Druckausgleicheinrichtung zugeordnet ist gekennzeichnet durch eine Anordnung von Kolbeneinheiten zur schrittweisen Einstellung der elastischen Druckausgleicheinrichtung.

2. Hydraulisches Druckregelventil nach Anspruch 1, dadurch gekennzeichnet, daß die Anordnung der Kolbeneinheiten Kolben mit Hüben derartiger geeigneter relativer Amplitude aufweist, daß die schrittweise Einstellung durch aufeinanderfolgende Verschiebung der Kolben binärer Digitalsequenz gewährleistet ist.

3. Hydraulisches Regelventil nach Anspruch 1 oder 2, dadurch gekennzeichnet, daß die Kolbeneinheiten teleskopförmig angeordnet sind.

4. Hydraulisches Druckregelventil nach Anspruch 3, dadurch gekennzeichnet, daß die Anordnung der Kolbeneinheiten wenigstens einen Rohrkolben aufweist, dessen Kolbenkopf durch einen Quersteg gebildet ist, welcher so angeordnet ist, daß zwei Zylinder für zwei andere Kolben gegeben sind, von denen wenigstens einer einen weiteren Kolben auf einer Kolbenstange trägt, die nach aussen aus dem Rohrkolben vorspringt.

5. Hydraulisches Druckregelventil nach einem der vorangehenden Ansprüche, dadurch gekennzeichnet, daß Kolben der Kolbeneinheiten individuell durch einen Druckflußregler betätigbar sind, der so angeordnet ist, daß er don Strom von Druckfließmittel in und aus jeden bzw. jedem Zylinder, der einen der Kolben enthält, steuert.

6. Hydraulisches Druckregelventil nach Anspruch 6, dadurch gekennzeichnet, daß der Druckschlußregler ein elektrisches Ventil ist.

## Revendications

1. Soupape de commande à pression hydraulique comprenant un tiroir de commande associé en fonctionnement à des moyens élastiques d'équilibrage de pression, caractérisée par un agencement d'ensembles de pistons pour le réglage pas à pas des moyens élastiques d'équilibrage de pression.

2. Soupape de commande à pression hydraulique suivant la revendication 1, caractérisé en outre en ce que l'agencement d'ensembles de pistons comprend des pistons dont les courses ont une amplitude relative appropriée pour assurer le réglage pas à pas par déplacement séquentiel des pistons selon une séquence numérique binaire.

3. Soupape de commande à pression hydraulique suivant la revendication 1 ou la revendication 2, caractérisé en outre en ce que l'agencement des ensembles de pistons est de forme télescopique.

4. Soupape de commande à pression hydraulique suivant la revendication 3, caractérisée en outre en ce que l'agencement des ensembles de pistons comprend au moins un piston tubulaire dont la tête est formée par une cloison transversale positionée de manière à définir deux cylindres pour deux autres pistons dont l'un au moins supporte un autre piston sur une tige dépassant extérieurement du piston tubulaire.

5. Soupape de commande à pression hydraulique, caractérisée outre en ce que les pistons des ensembles de piston peuvent être actionnés individuellement par une soupape de commande d'écoulement agencée de manière à commander l'écoulement de fluide sous pression vers et hors de chaque cylindre contenant l'un des pistons.

6. Soupape de commande à pression hydraulique suivant la revendication 5, caractérisée en outre en ce que la soupape de commande d'écoulement est une électrovalve.